Europäisches Patentamt

European Patent Office

Office européen des brevets

(11) Publication number: **0 237 133 B1**

# EUROPEAN PATENT SPECIFICATION

(45) Date of publication of patent specification: **04.03.92**  (51) Int. Cl.⁵: **A01B 33/10**

(21) Application number: **87200467.6**

(22) Date of filing: **12.03.87**

(54) **A soil working element, in particular a tine, intended for a soil cultivating machine.**

(30) Priority: **13.03.86 NL 8600648**

(43) Date of publication of application:
**16.09.87 Bulletin 87/38**

(45) Publication of the grant of the patent:
**04.03.92 Bulletin 92/10**

(84) Designated Contracting States:
**DE FR GB**

(56) References cited:
**DE-A- 2 500 711**
**DE-A- 3 329 009**
**DE-U- 7 130 609**
**GB-A- 1 496 004**

(73) Proprietor: **C. van der Lely N.V.**
**Weverskade 10 P.O. Box 26**
**NL-3155 ZG Maasland(NL)**

(72) Inventor: **Bom, Cornelis Johannes Gerardus**
**16 Laan van Nieuw Rozenburg**
**Rozenburg(NL)**

(74) Representative: **Mulder, Herman et al**
**Octrooibureau Van der Lely N.V. Weverskade**
**10 P.O. Box 26**
**NL-3155 ZG Maasland(NL)**

EP 0 237 133 B1

## Description

The invention concerns a soil working element, in particular a tine, intended for a soil cultivating machine, in particular a soil cultivating machine comprising at least one soil working member which is rotatable about an upwardly extending axis, the soil working element having a downwardly extending active portion. Such a soil working element is known from e.g. GB-A-1496004; these known soil working elements have the disadvantage that, as they are usually moved at a high speed through the soil, they are subjected to a comparatively high degree of wear which relatively rapidly reduces in particular the effective length of the soil working element.

Using the construction according to the invention, it is possible, as has been proved in actual practice, to reduce significantly the wear-induced shortening of the active portion of the soil working element by providing the free end of said active portion of the soil working element at the side located at the rear, taken in the direction of rotation of a soil working member, with a bulged-out portion. It has been found that the presence of this bulge, which contains additional material, in particular has a strongly inhibiting effect on the wear causing shortening of the active portion of the soil working element.

For a better understanding of the invention and to show how the same may be carried into effect, reference will now be made, by way of example, to the accompanying drawings, in which:

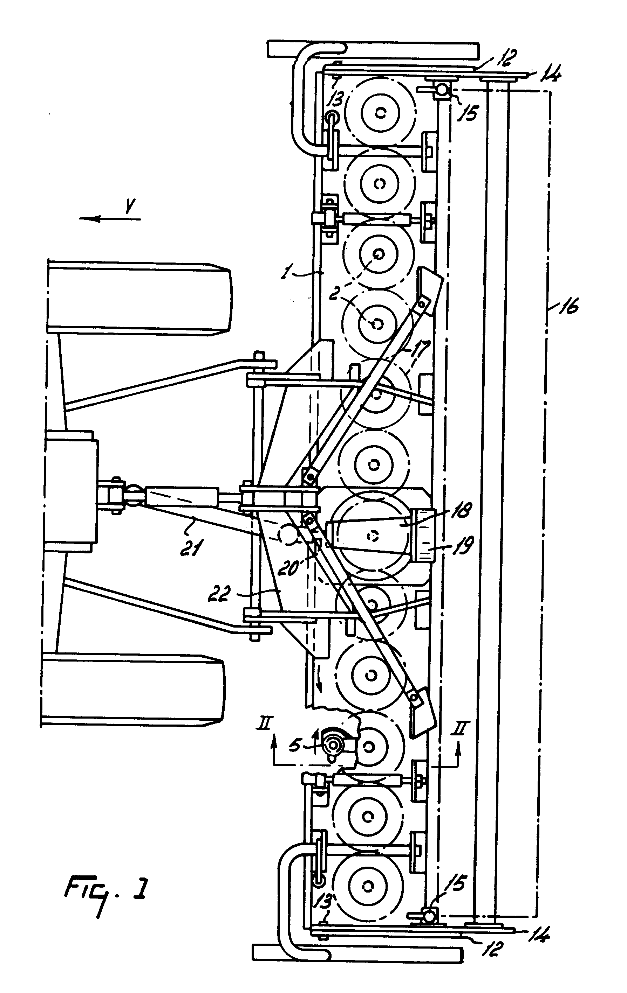

Figure 1 is a plan view of a soil cultivating machine comprising soil working elements according to the invention;

Figure 2 is a sectional view, to an enlarged scale, taken on the line II in Figure 1;

Figure 3 is a partly sectional view of a holder for the soil working element and a view of a soil working element, taken in the direction of the arrow III in Figure 2;

Figure 4 is a sectional view, taken on the line IV-IV in Figure 3;

Figure 5 is a sectional view, taken on the line V-V in Figure 3;

Figure 6 is a sectional view, taken on the line VI-VI in Figure 3;

Figure 7 is a sectional view, taken on the line VII-VII in Figure 3.

The implement shown in the drawings concerns a soil cultivating machine, in particular for preparing a seed bed.

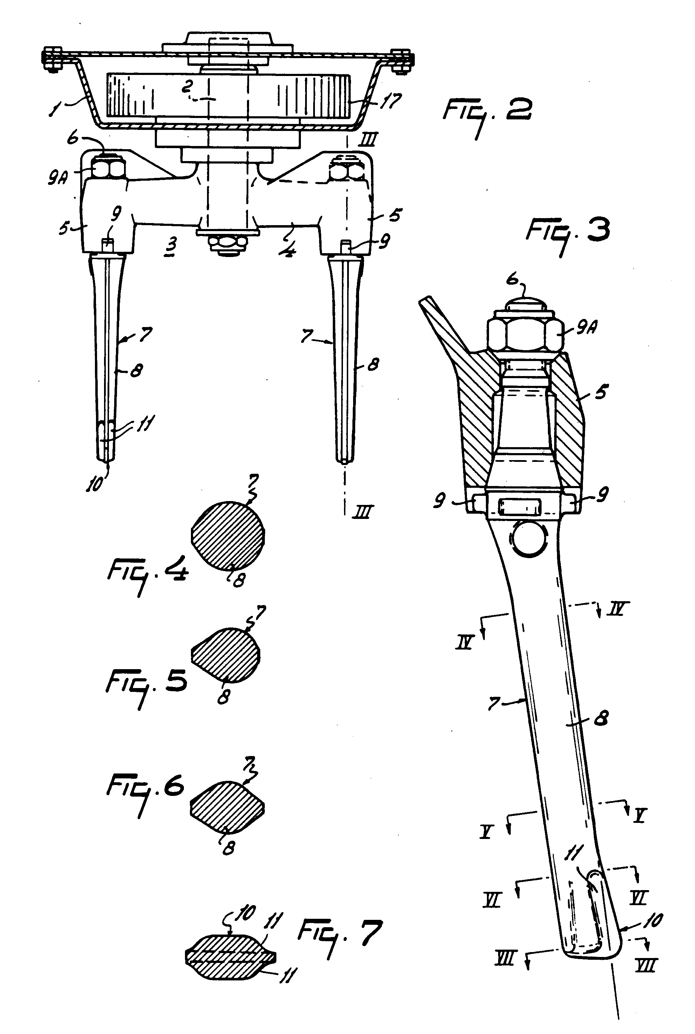

The machine comprises a box-like frame portion 1 which extends transversely to the direction of operative travel A and in which the upwardly directed, preferably vertical, shafts 2 of soil working members 3 are bearing-supported equidistantly, preferably spaced apart by 25 cms. Each of the soil working members 3 comprises an at least substantially horizontal carrier 4, which is fastened to that end of a shaft 2 projecting from the underside of the frame portion 1 and at its ends is provided with a holder 5 accommodating the fastening portions 6 of downwardly extending soil working elements 7 in the form of tines. The centre line of the fastening portions extends at least substantially parallel to the axis of rotation of a soil working member 3. Each of the tines 7 has an active portion 8 which joins the fastening portion 6 and is trailing` relative to the direction of rotation of a soil working member, whereby the longitudinal centre line of the active portion includes an angle of approximately 8° with the longitudinal centre line of the fastening portion 6. The fastening portion 6 is locked at the ends of a carrier 4 relative to a holder 5 by means of projections 9 at its lower side and a nut 9A at its upper side. Taken in the direction away from the connection to the fastening portion 6, the active portion 8 of a tine 7 substantially tapers towards its free end, its cross-section being at first at least substantially round and, towards its end, merging into a rectangular cross-section with rounded corners. The active portion has a rib at the front side, taken in the direction of movement through the soil. The free end of the active portion 8 of a tine 7 is provided at its rear side, taken in the direction of rotation of a soil working member 3, with a bulged-out portion 10 which from said free end (see the broken line in the drawing) extends upwardly over a length equal to approximately 1/6 of the length of the active portion 8 and, from the active portion extends in the shape of a fin via a recess formed by a shallow groove 11 (Figure 8). Initially, the bulge 10 extends from its bottom side via a rounded portion somewhat to the rear and subsequently merges into the active portion 8 via an upwardly extending, at least substantially straight side (Figure 3).

As is furthermore apparent from Figure 3, the shallow groove 11 extends over at least substantially two-thirds of the height of the bulge 10. In a vertical position of the fastening portion, the lower side of the tine is in a horizontal position, which results in the bulge 10 becoming drop-shaped, as is shown in a side view in Figure 3. The bulged portion extends rearwardly over a length equal to at least substantially half the length of the longest side of the rectangular cross-section of the active portion 8 in that region. As has been proved in practice, the bulged portion made and constituted as described in the foregoing provides a wear resistance of the tine that is significantly higher than that of the prior art tines, whilst, due to the fact that the additional material contained in the bulged portion extends upwardly from the free end of the tine over a relatively short distance, the power required for moving the active portion through the soil is hardly increased.

As has been found in practice, the tine, the active portion of which is provided with the bulged-out portion 10, is particularly resistant to a reduction of its length, which was found to be approximately half the length reduction of tines without a bulge. The ends of the box-like frame portion 1 are closed by plates 12, which extend in the direction of operative travel A and are directed upwardly. The front ends of the plates 12 are provided with a bolt 13, about which rearwardly extending arms 14 are freely pivotal, said arms being individually adjustable and lockable in a plurality of positions at the rear sides of the plates by means of an adjusting device 15. A roller 16, in this embodiment in the form of a cage roller, is arranged freely rotatably between the ends of the arms 14. Within the box-like frame portion 1, each of the shafts 2 is provided with a pinion 17, the arrangement being such that the pinions on the shafts of adjacent soil working members 3 are in driving connection with each other. Near its centre, the shaft 2 of a soil working member 3 is extended upwardly and reaches by means of this extension into a gear box 18. Within the gear box 18 the extension is in connection via a conical gear wheel transmission with a shaft which extends in the direction of operative travel A, the said shaft via a speed variator 19 arranged at the rear side of the gear box being in connection with a shaft 20 which extends in the direction of operative travel A, is located thereabove, and projects from said gear box at the front side. The end of the shaft 20 projecting from the gear box can be coupled to the power take-off shaft of a tractor via an intermediate shaft 21. Near the centre of the frame portion 1, a coupling trestle 22 is mounted for coupling of the machine to the three-point lifting hitch of a tractor.

The machine described in the foregoing operates as follows:

During operation, the machine is coupled to the three-point lifting hitch of the tractor by means of the coupling trestle 22 and each of the soil working members 3 can be rotated via the intermediate shaft 21 and the above-described transmission, whereby adjacently located soil working members 3 cultivate overlapping strips of soil by means of the soil working elements 7 which extend downwardly and are in the form of tines. Hereby the active portions 8 of the tines 7 of the soil working members 3 move through the soil in such a manner that these active portions are trailing. As has been mentioned before, it has been found in actual practice that it is in particular the "longitudinal wear" of an active portion 8 of a tine 7 that is significantly reduced, so that, owing to the bulged-out portion 10 provided at the rear side of the free end of each active portion 8 of a tine 7 and containing additional material, the useful life of the tine is increased considerably. Since the bulge 10 extends upwardly over only approximately 1/6 of the length of an active portion 8 from the free end of the tine, it is achieved that the power required to move the active portion of the tine through the soil is hardly increased, whilst in addition a maximum of wear resistance of the said portion of the tine is obtained with a minimum of additional material.

The invention is not limited to the features described in the foregoing, but also relates to all the details shown in the drawings whether they have been described or not.

## Claims

1. A soil working element (7), in particular a tine, intended for a soil cultivating machine, in particular a soil cultivating machine comprising at least one soil working member (3) which is rotatable about an upwardly extending axis, the soil working element (7) having a downwardly extending active portion (8), characterized in that the free end of said active portion (8) of the soil working element (7) is provided with a bulged-out portion (10) on the side of said free end which is located at the rear, taken in the direction of rotation of a soil working member (3).

2. A soil working element as claimed in claim 1, characterized in that the bulged-out portion (10) merges into the active portion (8) substantially via a recessed portion.

3. A soil cultivating element as claimed in claim 2, characterized in that the recessed portion is a groove (11).

4. A soil working element as claimed in any one of the preceding claims, characterized in that the bulged-out portion (10) extends at the free end of the active portion (8) to the rear over a distance which is at least substantially half of the largest dimension of the cross-section of the active portion (8) in that region.

5. A soil working element as claimed in any one of the preceding claims, characterized in that, taken from the free end of the active portion (8), the bulged-out portion (10) extends over at least substantially 1/6 of the length of the active portion (8).

6. A soil working element as claimed in any one of the preceding claims, characterized in that, at its side remote from the active portion (8), the bulged-out portion (10) initially extends rearwardly via a rounded portion and subsequently merges into the active portion (8) via an at least substantially straight side.

7. A soil working element as claimed in any one of the preceding claims, characterized in that the longitudinal centre line of the fastening portion (6) includes an angle with the longitudinal centre line of the active portion (8) and the bulged-out portion (10) is present at that side of the active portion (8) which is most remote from the extension of the longitudinal centre line of the fastening portion (16).

8. A soil working element as claimed in any one of the preceding claims, characterized in that, from its transition into the fastening portion (6), the active portion (8) tapers towards its lower free end and has at this free end an at least substantially rectangular cross-section, the bulged-out portion (10) joining the shortest side of the rectangular cross-section.

9. A soil working element as claimed in any one of the preceding claims, characterized in that the lower side of the free end of the active portion (8) extends at least substantially horizontally when the fastening portion (6) is in its vertical position, the arrangement being such that the bulged-out portion (10) becomes drop-shaped.

**Revendications**

1. Elément de travail du sol (7), en particulier une dent, destiné à une machine pour travailler le sol, en particulier à une machine pour travailler le sol comprenant au moins un organe de travail du sol (3) qui est rotatif autour d'une axe s'étendant vers le haut, l'élément de travail du sol (7) ayant une partie active (8) qui s'étend vers le bas,

**caractérisé** en ce que l'extrémité libre de ladite partie active (8) de l'élément de travail du sol (7) est munie d'une partie renflée (10) sur le côté de ladite extrémité libre qui est situé à l'arrière, vu dans le sens de rotation d'un organe de travail du sol (3).

2. Elément de travail du sol selon la revendication 1, caractérisé en ce que la partie renflée (10) se joint à la partie active (8), en grande partie par l'intermédiaire d'une partie renfoncée.

3. Elément pour cultiver le sol selon la revendication 2, caractérisé en ce que la partie renfoncée est une cannelure (11).

4. Elément de travail du sol selon l'une quelconque des revendications précédentes, caractérisé en ce que la partie renflée (10) s'étend, à l'extrémité libre de la partie active (8), vers l'arrière sur une distance qui est au moins sensiblement la moitié de la plus grande dimension de la section transversale de la partie active (8) dans cette région.

5. Elément de travail du sol selon l'une quelconque des revendications précédentes, caractérisé en ce que, en étant vue à partir de l'extrémité libre de la partie active (8), la partie renflée (10) s'étend sur au moins sensiblement 1/6 de la longueur de la partie active (8).

6. Elément de travail du sol selon l'une quelconque des revendications précédentes, caractérisé en ce que, sur son côté éloigné de la partie active (8), la partie renflée (10) s'étend initialement vers l'arrière par une partie arrondie et se raccorde ensuite à la partie active (8) par l'intermédiaire d'un côté au moins sensiblement rectiligne.

7. Elément de travail du sol selon l'une quelconque des revendications précédentes, caractérisé en ce que l'axe longitudinal de la partie de fixation (6) forme un angle avec l'axe longitudinal de la partie active (8) et en ce que la partie renflée (10) est présente sur le côté de la partie active (8) qui est le plus éloigné du prolongement de l'axe longitudinal de la partie de fixation (6).

8. Elément de travail du sol selon l'une quelconque des revendications précédentes, caractérisé en ce que, à partir de sa transition d'entrée dans la partie de fixation (6), la partie active (8) s'effile vers son extrémité libre inférieure et a, à cette extrémité libre, une section transversale au moins sensiblement rectangulaire, la partie renflée (10) se joignant au côté le plus court de la section transversale rectangulaire.

9. Elément de travail du sol selon l'une quelconque des revendications précédentes, caractérisé en ce que le côté inférieur de l'extrémité libre de la partie active (8) s'étend au moins sensiblement horizontalement quand la partie de fixation (6) est dans sa position verticale, l'agencement étant tel que la partie renflée (10) prend la forme d'une goutte.

**Patentansprüche**

1. Bodenbearbeitungswerkzeug (7) mit einem nach unten gerichteten Arbeitsteil (8), insbesondere Zinken für eine Bodenbearbeitungsmaschine, insbesondere für eine Bodenbearbeitungsmaschine mit mindestens einem Bodenbearbeitungsglied (3), das um eine aufwärts gerichtete Achse drehbar ist, dadurch gekennzeichnet, daß das freie Ende des Arbeitsteiles (8) des Bodenbearbeitungswerkzeuges (7) mit einem Wulst (10) versehen ist, der sich an der Rückseite des freien Endes befindet, bezogen auf die Drehrichtung eines Bodenbearbeitungsgliedes (13).

2. Bodenbearbeitungswerkzeug nach Anspruch 1, dadurch gekennzeichnet, daß der Wulst (10) in den Arbeitsteil (8) im wesentlichen mit einem vertieften Abschnitt übergeht.

3. Bodenbearbeitungswerkzeug nach Anspruch 2, dadurch gekennzeichnet, daß der vertiefte Abschnitt eine Aussparung (11) ist.

4. Bodenbearbeitungswerkzeug nach einem der vorhergehenden Ansprüche, dadurch gekennzeichnet, daß sich der Wulst (10) am freien Ende des Arbeitsteiles (8) nach hinten um ein Maß erstreckt, das mindestens im wesentlichen der Hälfte der größten Querschnittsabmessung des Arbeitsteiles (8) in diesem Bereich entspricht.

5. Bodenbearbeitungswerkzeug nach einem der vorhergehenden Ansprüche, dadurch gekennzeichnet, daß sich der Wulst (10) vom freien Ende des Arbeitsteiles (8) aus über mindestens im wesentlichen 1/6 der Länge des Arbeitsteiles (8) erstreckt.

6. Bodenbearbeitungswerkzeug nach einem der vorhergehenden Ansprüche, dadurch gekennzeichnet, daß sich der Wulst (10) an seiner von dem Arbeitsteil (8) abgewandten Seite nach hinten über einen abgerundeten Abschnitt erstreckt und anschließend in den Arbeitsteil (8) mit einer mindestens im wesentlichen geraden Seite übergeht.

7. Bodenbearbeitungswerkzeug nach einem der vorhergehenden Ansprüche, dadurch gekennzeichnet, daß die Längsmittellinie des Befestigungsteiles (6) einen Winkel mit der Längsmittellinie des Arbeitsteiles (8) bildet, und daß sich der Wulst (10) an derjenigen Seite des Arbeitsteiles (8) befindet, die von der Verlängerung der Längsmittellinie des Befestigungsteiles ( 6) am weitesten entfernt ist.

8. Bodenbearbeitungswerkzeug nach einem der vorhergehenden Ansprüche, dadurch gekennzeichnet, daß der Arbeitsteil (8) von seinem Übergang in den Befestigungsteil (6) aus in Richtung auf sein unteres freies Ende verjüngt ist und an diesem freien Ende einen mindestens im wesentlichen rechteckigen Querschnitt hat, wobei der Wulst (10) an die kürzeste Seite des rechteckigen Querschnittes anschließt.

9. Bodenbearbeitungswerkzeug nach einem der vorhergehenden Ansprüche, dadurch gekennzeichnet, daß die Unterseite des freien Endes des Arbeitsteiles (8) wenigstens im wesentlichen horizontal liegt, wenn der Befestigungsteil (6) seine vertikale Position hat, wobei die Anordnung derart ist, daß der Wulst (10) tropfenförmig ist.

FIG. 1

FIG. 2

FIG. 3

FIG. 4

FIG. 5

FIG. 6

FIG. 7